# EUROPEAN PATENT APPLICATION

(11) **EP 4 557 145 A1**
(43) Date of publication of application: **21.05.2025**
(21) Application number: 22952516.7
(22) Date of filing: 29.07.2022
(51) Int. Cl.: G06F 21/62, G06F 21/00

(54) **ACCESS CONTROL METHOD AND APPARATUS**

(71) Applicant: Huawei Technologies Co., Ltd., Shenzhen, Guangdong 518129 (CN)
(72) Inventor: ZHOU, Guangyu, Shenzhen, Guangdong 518129 (CN); ZHAO, Junhua, Shenzhen, Guangdong 518129 (CN)
(74) Representative: Gill Jennings & Every LLP
(86) International application number: PCT/CN2022/109116
(87) International publication number: WO 2024/021069

(57) **Abstract**

This application provides an access control method and an apparatus. The method includes: The apparatus may perform authentication on an application based on a file request of the application, to detect whether the application has permission to perform a target file operation on a target resource file. When the application has the corresponding permission, the apparatus may provide a corresponding system resource for the application, to meet a running requirement of the application. In this application, system resources are integrated for centralized management on permission for the system resources, so that configuration difficulty and costs can be effectively reduced, and overall processing efficiency of the apparatus can be improved.

## Description

### TECHNICAL FIELD

This application relates to the field of computer information technologies, and in particular, to an access control method and an apparatus.

### BACKGROUND

In the field of autonomous driving, blocking attacks from the entire internet and ensuring safe driving of terminal users have become one of important research topics.

As a cornerstone of autonomous driving in-vehicle software, an in-vehicle operating system needs to provide a powerful access control capability, to cope with various attack scenarios. Mainstream in-vehicle operating systems include but are not limited to Linux and the like. Currently, a common access control manner is: directly performing access control on real resources of the system.

Because there are a large quantity of scattered real resources in the system, in an access control manner for the real resources in the system, an access control policy needs to be configured based on the large quantity of scattered real resources, causing a large quantity of entries of the access control policy, and resulting in difficult configuration, high use costs, and low efficiency.

### SUMMARY

Embodiments of this application provide an access control method and an apparatus. In the method, the apparatus may integrate system resources, and perform permission control on the integrated systems resource by using a service, to reduce complexity of a permission configuration and authentication process, thereby improving overall processing efficiency of a system.

According to a first aspect, an embodiment of this application provides an access control method. The method includes: An apparatus obtains a first file request sent by a first application. Generation of the first file request is triggered by performing a target file operation on a target resource file by the first application. Then, the apparatus detects, based on the first file request and preset permission information, whether the first application has operation permission for the target file operation. When the first application has the permission to perform the target file operation, the apparatus invokes, based on the first file request, a plurality of system resources managed by a target service corresponding to the target resource file, where the plurality of system resources include software and hardware entities needed in a running process of the first application. In this way, in this embodiment of this application, the target service is presented to the application as a resource file, and the application may perform an operation on the resource file, so that the target service provides the plurality of corresponding system resources for the application. This simplifies an execution procedure on the application side, and reduces complexity of applying for a resource by the application. In addition, in this application, system resources are integrated, and permission control is performed on the integrated system resources by using a service, so that the service performs authentication on the application, to implement authentication on the plurality of system resources. In other words, the application may interact with the service, to obtain use permission for the plurality of system resources, thereby reducing complexity of a permission configuration and authentication process, and improving overall processing efficiency of a system.

For example, the apparatus includes a plurality of services, and each service is set based on a requirement of a corresponding application.

For example, system resources managed by the plurality of services in the apparatus and/or recorded use permissions are not completely the same.

For example, the preset permission information is an application permission table in the following embodiments. In this embodiment of this application, a form of a table is used as an example for description. In another embodiment, the preset permission information may alternatively be in another form. This is not limited in this application.

For example, the apparatus may be a middleware layer in the following embodiments, or may be an electronic device like an intelligent vehicle, a mobile phone, or a wearable device.

For example, the system resource is a real resource described in embodiments of this application, and may alternatively be referred to as an operating system resource. The system resource is a resource provided by a kernel of an operating system, and the system resource includes but is not limited to a network resource, a file resource, and the like.

For example, the apparatus may be the electronic device (for example, an intelligent vehicle or a wearable device) in embodiments of this application, or may be the middleware layer in embodiments of this application, or may be a chip in the electronic device. This is not limited in this application.

In a possible implementation, a second file request sent by the first application is obtained, where generation of the second file request is triggered by accessing the target resource file by the first application. Obtaining the first file request sent by the first application includes: When determining, based on the second file request, that the first application has access permission, the apparatus obtains the first file request sent by the first application. For example, the application needs to have access permission to access a file (for example, a real resource corresponding to a service) before performing another operation on the file. Correspondingly, after determining that the application has the access permission for the target resource file, the apparatus may further obtain another file request of the application, and further perform authentication.

In a possible implementation, the obtaining the second file request sent by the first application includes: After identity verification on the first application succeeds, the apparatus obtains the second file request sent by the first application. In this way, the apparatus may perform validity verification on the application, and then perform authentication on the application, to prevent an invalid application from unauthorizedly accessing the system resource managed by the target service corresponding to the resource file.

In a possible implementation, the second file request includes identification information of the target resource file and identification information of the first application, and the identity verification is performed based on the identification information of the target resource file and the identification information of the first application. In this way, the service is presented to the application side as the identification information of the target resource file. An access object of the application side is an object corresponding to the identification information. Compared with a conventional technology in which an application needs to access real resources one by one, in this application, the application may directly interact with a service corresponding to a needed real resource, to obtain the corresponding resource.

In a possible implementation, the identification information of the target resource file is a file path of the target resource file. In this way, the application can access a service in the same way as opening a file, thereby simplifying an inter-process interaction manner and making programming easier.

In a possible implementation, when the target file operation is a write operation, the first file request includes first target data; and that the apparatus invokes, based on the first file request, the plurality of system resources managed by the target service corresponding to the target resource file includes: The apparatus writes the first target data into the plurality of system resources managed by the target service corresponding to the target resource file. In this way, after performing identity verification on the application, the apparatus does not need to perform identity verification in a subsequent process, thereby simplifying an access step.

In a possible implementation, when the target file operation is a read operation, that the apparatus invokes, based on the first file request, the plurality of system resources managed by the target service corresponding to the target resource file includes: The apparatus reads, based on the first file request, second target data from the plurality of system resources managed by the target service corresponding to the target resource file. The apparatus returns the second target data to the first application. In this way, after performing identity verification on the application, the apparatus does not need to perform identity verification in a subsequent process, thereby simplifying an access step.

In a possible implementation, the target file operation includes the read operation or the write operation.

According to a second aspect, an embodiment of this application provides an access control apparatus. The access control apparatus includes a target service, the target service is configured to obtain a first file request sent by a first application, where generation of the first file request is triggered by performing a target file operation on a target resource file by the first application. The target service is further configured to detect, based on the first file request and preset permission information, whether the first application has operation permission for the target file operation. The target service is further configured to: when the first application has the permission to perform the target file operation, invoke, based on the first file request, a plurality of system resources managed by the target service corresponding to the target resource file, where the plurality of system resources include software and hardware entities needed in a running process of the first application.

In a possible implementation, the apparatus further includes an identity and access management module, the identity and access management module exchanges data with the first application through a first communication channel, and the identity and access management module exchanges data with the target service through a second communication channel. The identity and access management module is configured to obtain, through the first communication channel, a second file request sent by the first application, where generation of the second file request is triggered by accessing the target resource file by the first application, and the second file request includes identification information of the target resource file and identification information of the first application. The identity and access management module is further configured to: when identity verification performed on the first application based on the identification information of the target resource file and the identification information of the first application succeeds, send the second file request to the target service through the second communication channel. The target service is further configured to: when determining, based on the second file request, that the first application has access permission, establish a third communication channel between the target service and the first application. In this way, all authorized applications can exchange data with the identity and access management module through the preset communication channel. However, an invalid application cannot obtain a corresponding communication channel, and the identity and access and management module may refuse to exchange data with the invalid application. In addition, the service can interact with the application only through a secure channel, to ensure resource security. For an application that directly accesses a system resource of a kernel without using the secure channel, the kernel may determine that the application is an invalid application, thereby effectively improving system access security.

In a possible implementation, the target service is specifically configured to obtain, through the third communication channel, the first file request sent by the first application. The service interacts with the application through the secure channel, and no identity authentication is needed, thereby simplifying an access step.

In a possible implementation, the identification information of the target resource file is a file path of the target resource file.

In a possible implementation, when the target file operation is a write operation, the first file request includes first target data; and the target service is specifically configured to write the first target data into the plurality of system resources managed by the target service corresponding to the target resource file.

In a possible implementation, when the target file operation is a read operation, the target service is specifically configured to: read, based on the first file request, second target data from the plurality of system resources managed by the target service corresponding to the target resource file; and return the second target data to the first application.

In a possible implementation, the target file operation includes the read operation or the write operation.

The second aspect and any one of the implementations of the second aspect respectively correspond to the first aspect and any one of the implementations of the first aspect. For technical effects corresponding to the second aspect and any one of the implementations of the second aspect, refer to technical effects corresponding to the first aspect and any one of the implementations of the first aspect. Details are not described herein again.

According to a third aspect, an embodiment of this application provides a computer storage medium, configured to store a computer program. The computer program includes instructions used to perform the method according to any one of the first aspect or the possible implementations of the first aspect.

According to a fourth aspect, an embodiment of this application provides a computer program, where the computer program includes instructions used to perform the method according to any one of the first aspect or the possible implementations of the first aspect.

According to a fifth aspect, an embodiment of this application provides a chip, where the chip includes a processing circuit and a transceiver pin. The transceiver pin and the processing circuit communicate with each other through an internal connection path. The processing circuit performs the method according to any one of the first aspect or the possible implementations of the first aspect, to control a receive pin to receive a signal and a transmit pin to send a signal.

### BRIEF DESCRIPTION OF DRAWINGS

FIG. 1 is a block diagram of a structure of an intelligent vehicle according to an embodiment of this application;
FIG. 2 is a block diagram of a software structure of an intelligent vehicle according to an embodiment of this application;
FIG. 3 is a schematic flowchart of an access control method according to an embodiment of this application;
FIG. 4 is a block diagram of a software structure of an intelligent vehicle according to an embodiment of this application;
FIG. 5 is a block diagram of a software structure of an intelligent vehicle according to an embodiment of this application;
FIG. 6 is a block diagram of a software structure of an intelligent vehicle according to an embodiment of this application;
FIG. 7 is a diagram of an access procedure according to an embodiment of this application;
FIG. 8 is a block diagram of a software structure of an intelligent vehicle according to an embodiment of this application; and
FIG. 9 is a diagram of a structure of a device according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application.

An access control method in embodiments of this application may be applied to a scenario such as a self-driving service, an internet of things service, and a data service. Further, the method may be applied to an apparatus or a device such as a mobile phone, a notebook computer, an e-reader, an intelligent vehicle, a server, a wearable device, or a smart home device.

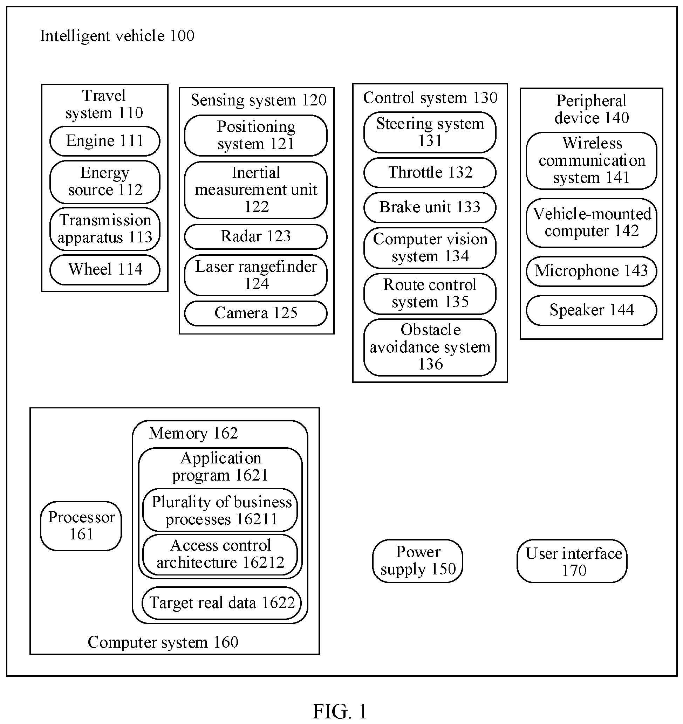

In embodiments of this application, an example in which the device is an intelligent vehicle (or may be understood as a vehicle-mounted device on the intelligent vehicle) is used for description. FIG. 1 is a block diagram of a structure of an intelligent vehicle according to an embodiment of this application. It should be understood that the intelligent vehicle 100 shown in FIG. 1 is merely an example of a device, and the intelligent vehicle 100 may have more or fewer components than those shown in the figure, may combine two or more components, or may have different component configurations. Various components shown in FIG. 1 may be implemented in hardware including one or more signal processing circuits and/or application-specific integrated circuits, software, or a combination of hardware and software.

As shown in FIG. 1, the intelligent vehicle 100 may include a plurality of systems, for example, a travel system 110, a sensing system 120, a control system 130, one or more peripheral devices 140, a power supply 150, a computer system 160, and a user interface 170. Optionally, the intelligent vehicle 100 may further include more or fewer systems, and each system may include a plurality of components. In addition, each subsystem and component of the intelligent vehicle 100 may be interconnected in a wired or wireless manner.

The travel system 110 may include a component that provides power for the intelligent vehicle 100 to move. In an embodiment, the travel system 110 may include an engine 111, an energy source 112, a transmission apparatus 113, and a wheel/tire 114. The engine 111 may be an internal combustion engine, an electric motor, an air compression engine, or a combination of other types of engines, for example, a hybrid engine including a gasoline engine and an electric motor, or a hybrid engine including an internal combustion engine and an air compression engine. The engine 111 converts the energy source 112 into mechanical energy. Examples of the energy source 112 include gasoline, diesel, other oil-based fuels, propane, other compressed gas-based fuels, ethyl alcohol, solar panels, batteries, and other power sources. The energy source 112 may also provide energy for another system of the intelligent vehicle 100.

The transmission apparatus 113 may transmit mechanical power from the engine 111 to the wheel 114. The transmission apparatus 113 may include a gearbox, a differential, and a drive shaft. In an embodiment, the transmission apparatus 113 may further include another component, for example, a clutch. The drive shaft may include one or more shafts that may be coupled to one or more wheels 114.

The sensing system 120 may include several sensors that sense information about an ambient environment of the intelligent vehicle 100. For example, the sensing system 120 may include a positioning system 121 (where the positioning system 121 may be a GPS system, a BeiDou system, or another positioning system), an inertial measurement unit (inertial measurement unit, IMU) 122, a radar 123, a laser rangefinder 124, and a camera 125. The sensing system 120 may further include a sensor (for example, an in-vehicle air quality monitor, a fuel gauge, or an oil temperature gauge) of an internal system of the monitored intelligent vehicle 100. Sensor data from one or more of these sensors can be used to detect an object and corresponding features (a location, a shape, a direction, a speed, and the like) of the object. Such detection and recognition are key functions of a safe operation of the autonomous intelligent vehicle 100.

The positioning system 121 may be configured to estimate a geographical location of the intelligent vehicle 100.

The IMU 122 is configured to sense location and orientation changes of the intelligent vehicle 100 based on an inertial acceleration. In an embodiment, the IMU 122 may be a combination of an accelerometer and a gyroscope. For example, the IMU 122 may be configured to measure curvature of the intelligent vehicle 100.

The radar 123 may sense an object in the ambient environment of the intelligent vehicle 100 by using a radio signal. In some embodiments, in addition to sensing the object, the radar 123 may be further configured to sense a speed and/or a forward direction of the object.

The laser rangefinder 124 may sense, by using a laser, an object in an environment in which the intelligent vehicle 100 is located. In some embodiments, the laser rangefinder 124 may include one or more laser sources, a laser scanner, one or more detectors, and another system component.

The camera 125 may be configured to capture a plurality of images of the ambient environment of the intelligent vehicle 100. The camera 125 may be a static camera or a video camera.

The control system 130 controls operations of the intelligent vehicle 100 and components of the intelligent vehicle 100. The control system 130 may include various components, including a steering system 131, a throttle 132, a brake unit 133, a computer vision system 134, a route control system 135, and an obstacle avoidance system 136.

The steering system 131 may be operated to adjust a forward direction of the intelligent vehicle 100. For example, in an embodiment, the steering system may be a steering wheel system, and may be configured for a rotation angle of a steering wheel.

The throttle 132 is configured to control an operating speed of the engine 111 and further control a speed of the intelligent vehicle 100.

The brake unit 133 is configured to control the intelligent vehicle 100 to decelerate. The brake unit 133 may use friction to slow down the wheel 114. In another embodiment, the brake unit 133 may convert kinetic energy of the wheel 114 into a current. The brake unit 133 may alternatively reduce a rotational speed of the wheel 114 in another form, to control the speed of the intelligent vehicle 100.

The computer vision system 134 may be operated to process and analyze the images captured by the camera 125, to recognize an object and/or a feature in the ambient environment of the intelligent vehicle 100. The object and/or the feature may include a traffic signal, a road boundary, and an obstacle. The computer vision system 134 may use an object recognition algorithm, a structure from motion (Structure from Motion, SFM) algorithm, video tracking, and another computer vision technology. In some embodiments, the computer vision system 134 may be configured to map an environment, track an object, estimate a speed of an object, and the like.

The route control system 135 is configured to determine a traveling route of the intelligent vehicle 100. In some embodiments, the route control system 135 may determine the traveling route for the intelligent vehicle 100 with reference to data from the sensing system 120, the GPS 121, and one or more predetermined maps.

The obstacle avoidance system 136 is configured to identify, evaluate, and avoid or otherwise bypass a potential obstacle in an environment of the intelligent vehicle 100.

Certainly, in an instance, the control system 130 may additionally or alternatively include a component other than those shown and described. Alternatively, some of the foregoing components may be removed.

The intelligent vehicle 100 interacts with an external sensor, another vehicle, another computer system, or a user via the peripheral device 140. The peripheral device 140 may include a wireless communication system 141, a vehicle-mounted computer 142, a microphone 143, and/or a speaker 144.

In some embodiments, the peripheral device 140 provides a means for a user of the intelligent vehicle 100 to interact with the user interface 170. For example, the vehicle-mounted computer 142 may provide information for the user of the intelligent vehicle 100. The user interface 170 may further operate the vehicle-mounted computer 142 to receive input from the user. The vehicle-mounted computer 142 may perform an operation by using a touchscreen. In another case, the peripheral device 140 may provide a means for the intelligent vehicle 100 to communicate with another device located in the vehicle. For example, the microphone 143 may receive audio (for example, a voice command or other audio input) from the user of the intelligent vehicle 100. Similarly, the speaker 144 may output audio to the user of the intelligent vehicle 100.

The wireless communication system 141 may wirelessly communicate with one or more devices directly or through a communication network.

The power supply 150 may supply power to various components of the intelligent vehicle 100. In an embodiment, the power supply 150 may be a rechargeable lithium-ion or lead-acid battery. One or more battery packs of the battery may be configured as a power supply to supply power to the various components of the intelligent vehicle 100. In some embodiments, the power supply 150 and the energy source 112 may be implemented together, as in some pure electric vehicles.

Some or all functions of the intelligent vehicle 100 are controlled by the computer system 160. The computer system 160 may include at least one processor 161 and a memory 162.

The processor 161 may be any conventional processor, such as a commercially available processor CPU. Alternatively, the processor may be a dedicated device such as an ASIC or another hardware-based processor.

The memory 162 may store an application program 1621 and target real data 1622. The application program 1621 includes at least a plurality of business processes 16211 and an access control architecture 16212.

The processor 161 executes the application program 1621 stored in the memory 162. For example, the processor 161 is configured to invoke the plurality of business processes 16211 and the access control architecture 16212 in the memory 162 to access a real resource 1623.

It may be understood that the functional diagram of the intelligent vehicle 100 in FIG. 1 is merely an example implementation in embodiments of this application, and is not intended to limit the intelligent vehicle 100 in embodiments of this application.

A software system of the intelligent vehicle 100 may use a layered architecture, an event-driven architecture, a microkernel architecture, a micro service architecture, or a cloud architecture. In embodiments of this application, a Linux system with a layered architecture is used as an example to describe a software structure of the intelligent vehicle 100. Certainly, embodiments of this application may be further applied to another system, for example, an Android system or a SELinux system. This is not limited in this application.

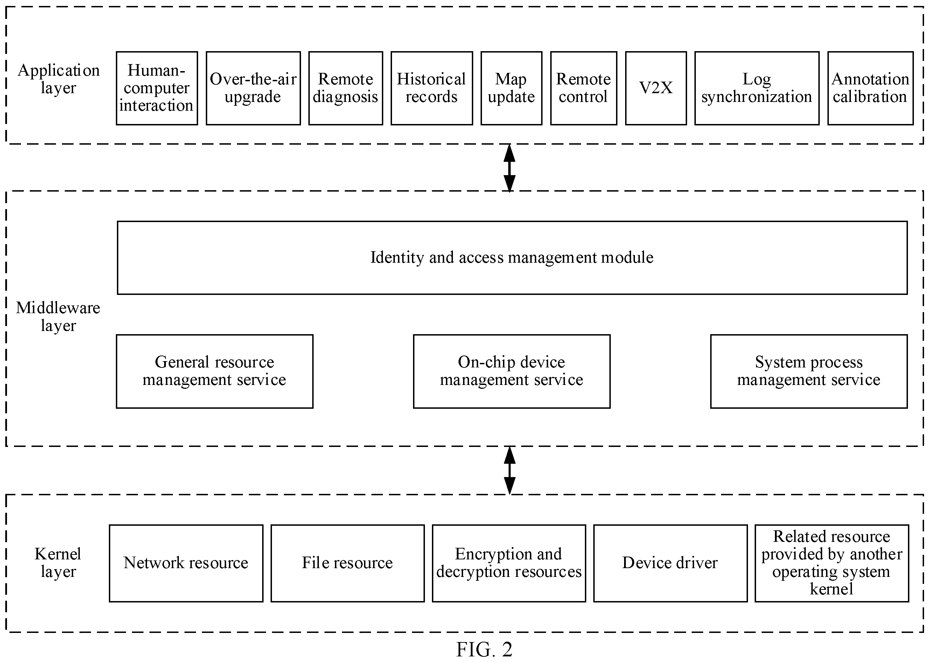

FIG. 2 is a block diagram of an example of a software structure of the intelligent vehicle 100. Refer to FIG. 2. The software structure specifically includes but is not limited to an application layer, a middleware layer, a kernel layer, and the like. In a possible implementation, the application layer, the middleware layer, and the kernel layer may be understood as being included in the Linux system. In other words, the application layer, the middleware layer, the kernel layer, and the like form a software architecture of the Linux system. In another possible implementation, in the Linux system, the kernel layer may alternatively be understood as the Linux system, and the application layer and the middleware layer may be understood as layers above the Linux system architecture. For another system such as an Android system, the Android system may include but is not limited to an application layer, a system framework layer, a kernel layer, and the like. The system framework layer may be equivalent to the middleware layer in embodiments of this application. In other words, a service, an identity verification module, and the like included in the middleware layer may be disposed at the system framework layer of the Android system. Certainly, locations, quantities, and names of the layers in embodiments of this application are merely examples. The system may include more or fewer layers. This is not limited in this application.

For example, the application layer may alternatively be referred to as a business layer, and the application layer includes a series of businesses (which may alternatively be referred to as applications). The businesses include but are not limited to human-computer interaction, over-the-air upgrade, remote diagnosis, historical records, map update, remote control, V2X, log synchronization, annotation calibration, and the like.

In embodiments of this application, different businesses may provide different functions for the intelligent vehicle. For example, the human-computer interaction business may provide a human-computer interaction interface for the user. The user may perform a corresponding operation on the intelligent vehicle 100 through the human-computer interaction interface. The human-computer interaction business performs a corresponding operation on the intelligent vehicle in response to the received user operation. For another example, the over-the-air upgrade business may provide an over-the-air upgrade function of an application (that is, a business) for the intelligent vehicle. In other words, the over-the-air upgrade business may obtain a latest version of each business from a cloud, and upgrade a current business version based on the latest version.

Optionally, an application package corresponding to at least one of the businesses may be pre-installed on the intelligent vehicle 100 before delivery, and the business is automatically installed when the intelligent vehicle 100 is started for the first time.

Optionally, the intelligent vehicle 100 may alternatively automatically install at least one of the businesses before delivery.

Optionally, the intelligent vehicle 100 may alternatively download an application package from the cloud (which is a server or a cluster including a plurality of servers), and run the application package to install a corresponding business.

The middleware layer may be understood as between the application layer and the kernel layer. The middleware layer may exchange data with the application layer and the kernel layer, to perform permission control and resource integration when the application layer invokes a real resource of the kernel layer, thereby providing a simple, easy-to-operate, and highly secure access control mechanism. For example, the middleware layer includes but is not limited to an identity and access management (Identity and Access Management, IAM) module and a plurality of services. The services include but are not limited to a general resource management service, an on-chip device management service, a system process management service, and the like. Names, types, and a quantity of services shown in FIG. 2 are merely examples. This is not limited in this application.

As shown in FIG. 2, the real resource (which may alternatively be referred to as a system resource, a kernel resource, a kernel real resource, or the like, and may be set based on an actual requirement, which is not limited in this application) at the kernel layer includes but is not limited to a network resource, a file resource, encryption and decryption resources, a device driver, a related resource provided by another operating system kernel, and the like. In other words, the kernel may provide a real resource needed by an upper-layer application for the application. Certainly, the kernel may further include another module or hardware. Details are not described in this application.

It should be noted that the real resource in embodiments of this application may be a hardware resource and/or a software resource, or may be understood as a software entity and/or a hardware entity. This is not limited in this application. For example, the kernel may provide a storage resource for the upper-layer application, but actual storage space on a storage (for example, a hard disk) is invisible to an upper layer (including the service and the business in this specification). The kernel maps the storage to a file system (which may alternatively be understood as a file resource) for services to invoke.

In embodiments of this application, before the intelligent vehicle 100 is delivered, an operator may preconfigure a correspondence between a service and a real resource of the kernel based on a business scenario requirement of a business.

In embodiments of this application, the business scenario requirement may include a requirement for a type of a real resource during business running. For example, when a business process corresponding to a business A (for example, a human-computer interaction business) is running (which may be understood as a human-computer interaction business scenario), real resources needed by the business A include a real resource A (for example, a file resource), a real resource B (for example, a device driver), and a real resource C (for example, a hardware acceleration resource). In this case, a service A (for example, a general resource management service) may be set in the intelligent vehicle 100, and the service A is used to manage the real resource A, the real resource B, and the real resource C. The real resource A, the real resource B, and the real resource C may also be understood as a set of real resources managed by the service A. For another example, when a business process corresponding to a business B (for example, a remote diagnosis service) is running, real resources needed by the business B include a real resource A (for example, a file resource) and a real resource D (for example, a network resource). Correspondingly, a service B may be set in the intelligent vehicle 100, and the service B is used to manage the real resource A and the real resource D. It should be noted that the "business process" in embodiments of this application is optionally an instance when a program corresponding to a business is running. It may be understood that the business is a segment of computer program before running, and after the computer program of the business runs, an entity corresponding to the computer program is the business process. In the following embodiments of this application, all steps performed by the business may be understood as being performed by the business process. Details are not described below again.

In embodiments of this application, in addition to the type (namely, the type) of the real resource, the business scenario requirement further includes a requirement for permission for the real resource. Correspondingly, the correspondence between the service and the real resource further needs to be set based on a requirement for permission for the real resource in a business scenario.

For example, real resources needed by a business A include a real resource A, a real resource B, and a real resource C, and the business A further needs access (that is, "open (open)") permission, read permission, and write permission for the real resource A, the real resource B, and the real resource C. Correspondingly, a service A may be used to manage the real resource A, the real resource B, and the real resource C. Real resources needed by a business C also include the real resource A, the real resource B, and the real resource C. However, the business C may need only (or may be understood as having only) access and read permission for the real resources. Correspondingly, the service C may be used to manage the real resource A, the real resource B, and the real resource C. A service B and the service C are different services. It is clear that because businesses have different requirements for permission for real resources managed by the services, corresponding services are also different. Certainly, in some embodiments, different businesses may alternatively have a same requirement for a real resource, and correspondingly, services corresponding to the businesses having the same requirement are also the same.

Optionally, in embodiments of this application, types of real resources managed by different services may be the same, but permissions set for the different services are different. Optionally, types of real resources managed by different services may alternatively be different. In other words, types of and/or permissions for real resources corresponding to different services are not completely the same.

In embodiments of this application, as described above, the correspondence between the service and the real resource is set based on the business scenario requirement of the business. The business scenario requirement includes the type of and the permission for the real resource. In embodiments of this application, each service (including a sub-service) may be used to manage permission of a business for a plurality of real resources (which may also be understood as a real resource set) corresponding to the service. For example, the service may maintain a business permission table, and the business permission table may be used to record whether each business has permission to access a real resource corresponding to the service. The permission includes but is not limited to access permission, read permission, write permission, and the like. The service may determine, based on the business permission table, whether a corresponding real resource can be provided for the business. A specific example is described in the following embodiments, and details are not described herein.

In conclusion, in embodiments of this application, the operator may integrate the real resources in the kernel of the intelligent vehicle 100 in advance, to perform permission management on the real resources by using a corresponding service. It should be noted that, for a business, the business can only exchange data with a service, to obtain a corresponding real resource. Actually, a real resource of a system is invisible to the business, and this effectively improves security of the real resource of the system.

It should be noted that, in embodiments of this application, each service may alternatively be referred to as a module, a logical unit, or the like. This is not limited in this application.

In this embodiment of this application, a single service may be an independent service, that is, one type of service is provided. A single service may alternatively include a plurality of sub-services, to provide a plurality of types of services.

It should be noted that a correspondence between the business and the service and the correspondence between the service and the real resource in embodiments of this application are merely examples. In another embodiment, the correspondences may be set based on an actual requirement. This is not limited in this application.

In a possible implementation, the intelligent vehicle 100 may interact with the cloud, to detect whether there is a new service version. For example, the intelligent vehicle 100 may periodically send a service update request to the cloud, to request a service version currently stored on the cloud side. If the current service version on the cloud is inconsistent with a current service version of the intelligent vehicle 100, the intelligent vehicle 100 may download the new service version from the cloud. Optionally, the new service version is a higher-level version of at least one service in the intelligent vehicle 100, or the new version may be a service not included in the intelligent vehicle 100. In other words, the operator may update a version of at least one service on the cloud based on a business in a market or a requirement of a business installed on the intelligent vehicle 100, and the vehicle-mounted device may obtain a latest version of each service from the cloud.

Still refer to FIG. 2. The identity and access management module at the middleware layer is configured to perform validity verification on a business, and may determine a corresponding service based on a business request.

In embodiments of this application, before the intelligent vehicle 100 is delivered, the operator may configure an identity verification channel (which may alternatively be referred to as a trusted channel, a verification channel, or the like, and is not limited in this application) between the business and the identity and access management module in the intelligent vehicle 100. For example, the identity verification channel may be maintained based on IPC (Inter-Process Communication, inter-process communication) communication. The business in the intelligent vehicle 100 may exchange data with the identity verification module through the preset identity verification channel.

For example, the identity and access management module may maintain a business information table, and the business information table includes business verification information and service information. The business verification information is used to perform validity verification on the business. For example, the business verification information may include information such as identification information of the business. The identity and access management module may perform, based on the business verification information, validity verification on a business (or a business process (for a concept, refer to the foregoing descriptions)) that exchanges data with the identity and access management module, to verify whether the business is a valid business. In this embodiment of this application, the valid business is usually a business obtained through a formal channel. The "formal channel" optionally includes but is not limited to a cloud (which may alternatively be an application store, a platform, or the like provided by a device vendor), or a case that the service is installed before delivery. However, a business downloaded and installed through another channel may be an invalid business, and cannot pass the validity verification performed by the identity and access management module.

For example, the service information in the business information table indicates a target service that can be provided for the business. The identity and access management module may specify a corresponding service for the business based on the service information. A specific implementation is described in detail below.

It should be noted that a recording manner (that is, a table manner) of each type of table in embodiments of this application is merely an example. In another embodiment, information may alternatively be recorded in another manner. This is not limited in this application.

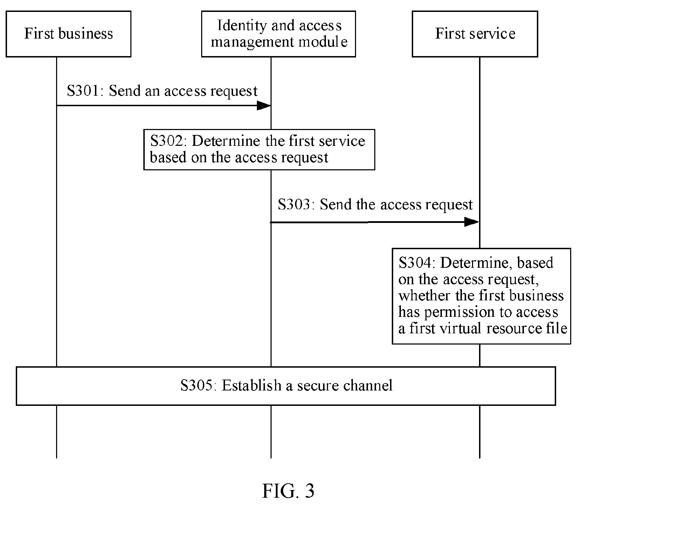

FIG. 3 is a schematic flowchart of an access control method according to an embodiment of this application. Refer to FIG. 3. Steps include but are not limited to the following.

S301: A first business sends an access request to an identity and access management module.

For example, the first business sends the access request to the identity and access management module in response to a received user operation. The access request includes but is not limited to identification information of the business, a first virtual resource file, and access request information. The access request is used to request a service corresponding to the first virtual resource file to provide a real resource for the business. As described above, a service in an intelligent vehicle and a correspondence between the service and a real resource are both set based on a business scenario requirement of the business. Correspondingly, after the first business runs, a real resource that supports running of the first business needs to be opened (that is, accessed). In this embodiment of this application, as described above, after real resources are integrated, the real resources are managed by using a corresponding service. Correspondingly, the first business needs to interact with the corresponding service, to request the service to provide a corresponding real resource for the first business.

It should be noted that the first business may be any business in the intelligent vehicle.

It should be further noted that, in this embodiment of this application, only an example in which a user triggers the first business to perform a related operation is used for description. In another embodiment, there may alternatively be another trigger condition for sending the access request by the first business. For example, the first business may periodically trigger the access request. This is not limited in this application.

For example, the identification information of the business may be an ID number of a business process (for a concept, refer to the foregoing descriptions), or may be other information that can uniquely identify the business. This is not limited in this application.

For example, the access request information is used to request access permission.

In this embodiment of this application, a corresponding virtual resource file is preconfigured for each service (including a sub-service). The virtual resource file may provide an access interface for the first business to access a service, to prevent the first business from directly accessing the service, thereby further improving system security. Correspondingly, in this embodiment of this application, the first business may carry request information of the first virtual resource file, to interact with a first service corresponding to the first virtual resource.

For example, identification information of the virtual resource file may be a name of a file path style. In another embodiment, the virtual resource file may alternatively be in another form. This is not specially limited in this application.

It should be noted that the virtual resource file in this embodiment of this application may alternatively be understood as identification information of a service. The virtual resource file may uniquely identify the corresponding service. For example, in the following embodiments, the identity and access management module may find the corresponding service based on the virtual resource file.

It should be further noted that the virtual resource file in this embodiment of this application may alternatively be understood as abstracting a service as a file path (or identification information in another form). In other words, each service is presented as a file path from the perspective of a business. Correspondingly, a business may obtain a corresponding real resource by accessing or operating a file path.

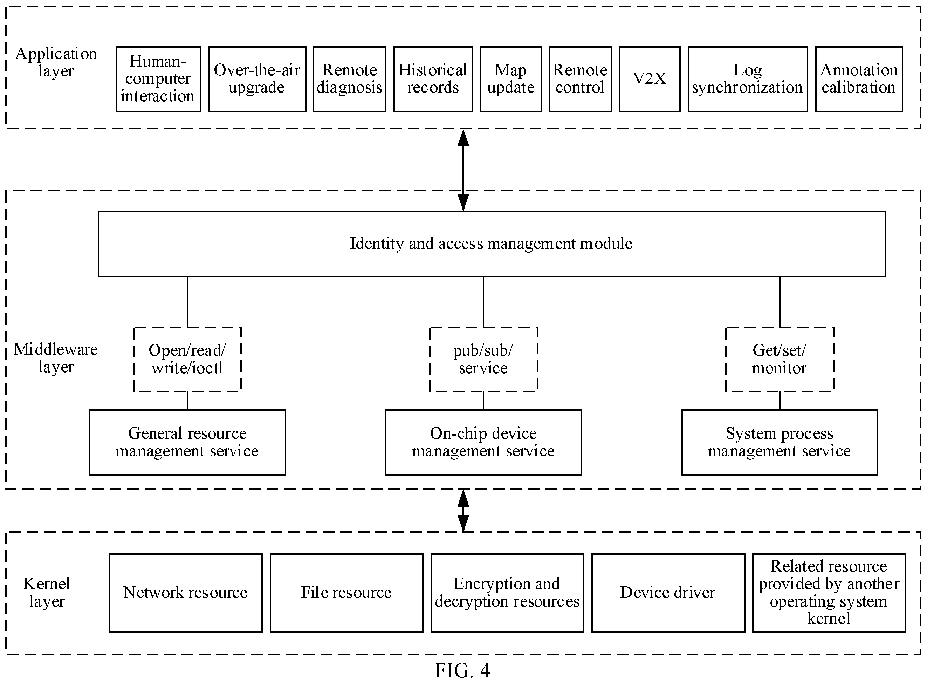

FIG. 4 is a diagram of an example of a software structure of an intelligent vehicle 100. Refer to FIG. 4. In this example, a corresponding virtual resource file is preset (that is, set before delivery) for each service (including a sub-service). The virtual resource file may alternatively be understood as identification information of the service, and uniquely identifies the corresponding service. In this embodiment of this application, the virtual resource file is a file path name. For example, in the field of autonomous driving, the virtual resource file includes but is not limited to Open/read/write/ioctl, pub/sub/service, Get/set/monitor, and the like. The virtual resource file Open/read/write/ioctl corresponds to a general resource management service, pub/sub/service corresponds to an on-chip device management service, and Get/set/monitor corresponds to a system process management service. In other words, another module (for example, an identity and access management module) may find a corresponding general resource management service by using "Open/read/write/ioctl", to exchange data with the general resource management service. It should be noted that each virtual resource file (that is, a file path corresponding to a service) is set according to a preset rule. The rule may be set based on an actual requirement. This is not limited in this application. It should be further noted that each virtual resource file is unique, to uniquely identify a corresponding service.

In other words, for a business, after real resources are integrated, the resources are managed by using a service, and the service is presented to the business as a virtual resource file. In this embodiment of this application, the business may request, by accessing the virtual resource file, a service corresponding to the virtual resource file to provide a corresponding real resource. In other words, in this embodiment of this application, the service is virtualized into a file, and the file is presented to the business layer. When the business layer interacts with the service, it may be considered as accessing a file (or may be referred to as a virtual file).

It should be noted that names and a quantity of virtual resource files, and correspondences between the services and the virtual resource files in FIG. 4 are merely examples, and may be set based on the actual requirement. This is not limited in this application. A specific operation process between the virtual resource and the service is described in detail below.

It should be noted that "accessing" a virtual resource file in this embodiment of this application may also be understood as "opening (open) "a virtual resource file. In other words, before performing a read and/or write operation on the virtual resource file, the business needs to "open" the virtual resource file, to perform a subsequent operation on the virtual resource file.

It should be further noted that, in this embodiment of this application, for a business side, operations such as access, read, and write performed by the business side are all performed on the virtual resource file. Actually, the business performs an operation on a real resource managed by a service corresponding to the virtual resource file. A specific implementation is described in detail below.

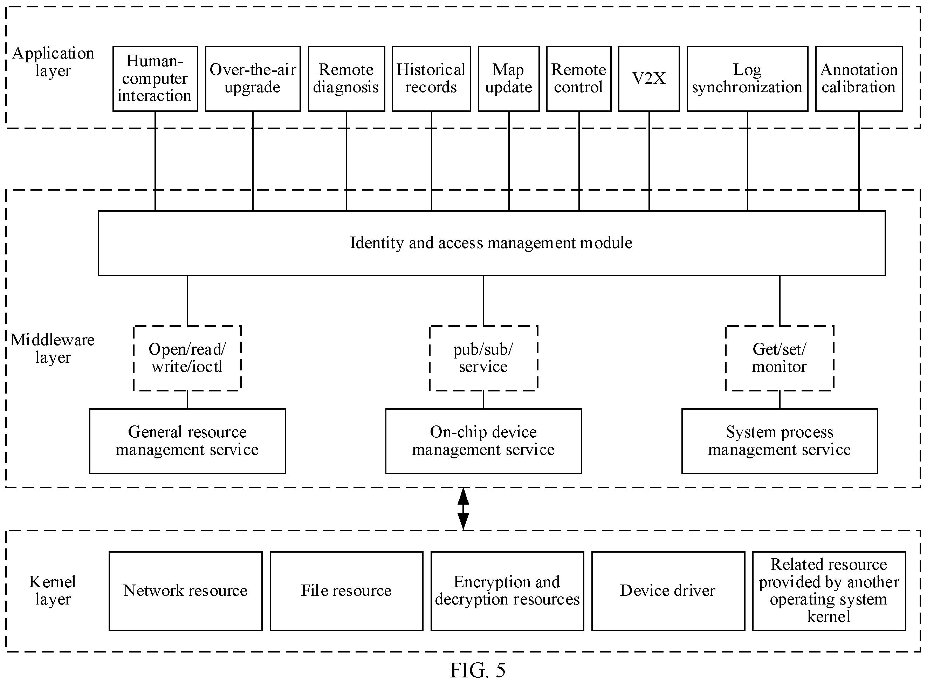

In this embodiment of this application, as shown in FIG. 5, an identity verification channel is preset between each business and the identity and access management module. The first business is used as an example. The first business may send the access request to the identity and access management module through the identity verification channel. It should be noted that the identity verification channel in this embodiment of this application is maintained based on IPC communication. A specific communication manner may be a pipe or another feasible manner. This is not limited in this application. A pipe manner in IPC communication is used as an example. An operator preconfigures an identity verification channel for the identity and access management module and the first business in a kernel. The identity verification channel may also be understood as a pipe that can be used only for communication between the first business and the identity and access management module. The pipe is a string of caches in the kernel. The first business may write data (for example, the access request described above) from one end of the pipe, and the written data is actually cached in the kernel. The data is read from the other end (namely, the identity and access management module), that is, the data is read from the kernel. Certainly, in another embodiment, an identity verification channel is also preset between another business, for example, a second business, and the identity and access management module, and the identity verification channel is used only for data exchange between the second business and the identity and access management module.

In a possible implementation, if an invalid business (for example, an application downloaded by a vehicle-mounted device from a third-party platform, where the application is not verified by an intelligent vehicle platform) needs to access a real resource in the kernel, because no identity verification channel is preconfigured for the business, the business cannot communicate with the identity and access management module. Correspondingly, the invalid business cannot pass validity verification. The kernel of an operating system of the intelligent vehicle may provide a mandatory access mechanism. When detecting that an invalid business fails to pass validity verification, the mandatory access mechanism may refuse the business to access the kernel. A case in which the validity verification fails includes: Interaction with the identity and access management module is not performed through a preset identity verification channel, and/or interaction with the identity and access management module is performed through the identity verification channel but the verification fails.

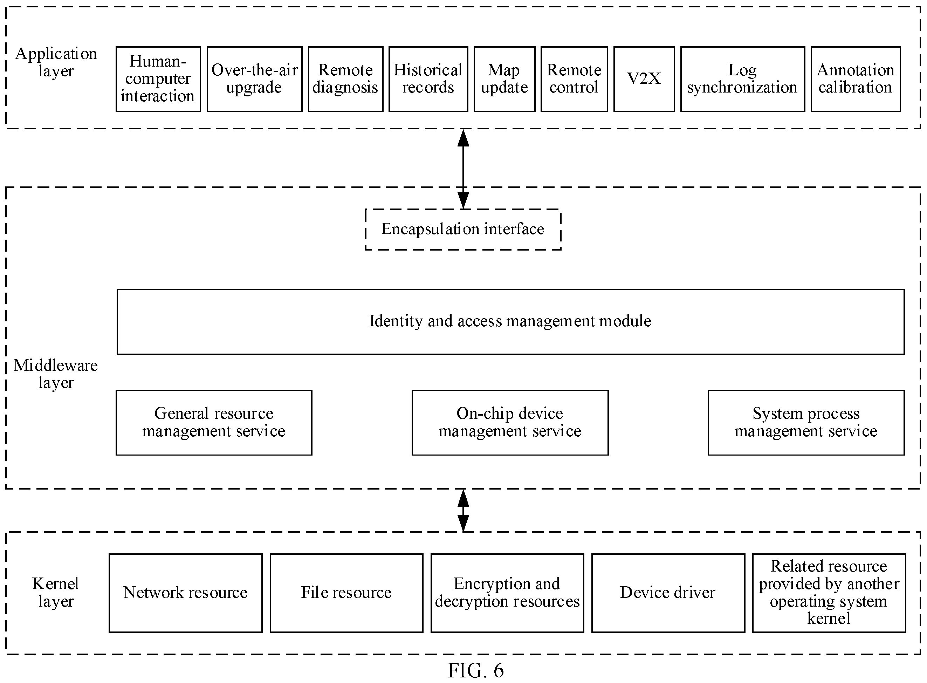

In another possible implementation, as shown in FIG. 6, a middleware layer may provide an encapsulation interface for the application layer. Optionally, the encapsulation interface is a POSIX (Portable Operating System Interface, portable operating system interface). In another embodiment, the encapsulation interface may be another standard interface. This is not limited in this application. In this embodiment of this application, the POSIX interface may support an IPC communication mechanism (or another communication standard, which is not limited in this application). In this example, data exchange may be performed between the first business and the identity and access management module at the middleware layer or between the first business and a service at the middleware layer through the POSIX interface. Communication between the first business and the identity and access management module is used as an example for description. In a process in which the first business communicates with the identity and access management module through the POSIX interface, the first business and the identity and access management module encapsulate information (for example, the access request sent by the first business, or information fed back by the identity and access management module) that needs to be exchanged, to obtain information that is in a preset format (that is, compliant with IPC communication), to implement a compatible access interface, thereby implementing a high-performance information transmission mechanism. It should be noted that communication between the first business and the service is similar to that described above, and details are not described below again.

S302: The identity and access management module determines the first service based on the access request.

For example, as described above, identity verification channels between the identity and access management module and different businesses are preconfigured, and the identity and access management module may receive, based on the identity verification channel, the access request sent by the first business.

The identity and access management module may decapsulate the access request, to obtain the first virtual resource file and other information (for example, the identification information of the business and the access request information) in the access request.

As described above, the identity and access management module may maintain a business information table, and the business information table includes business verification information and service information. The identity and access management module may perform validity verification on information (for example, the identification information of the business) in the access request based on the business verification information.

In an example, if the verification succeeds, a subsequent step continues to be performed. In another example, if the verification fails, the identity and access management module determines that the business is an invalid business, and refuses a request of the business, that is, does not perform a subsequent step for the business. Correspondingly, the invalid business cannot perform an operation on a real resource of a system.

For example, after the identity and access management module determines that the verification succeeds, the identity and access management module may determine, based on the first virtual resource file carried in the access request and the service information maintained by the identity and access management module, the first business that can provide the corresponding service for the first business.

Refer to FIG. 4 or FIG. 5. As described above, each service corresponds to a virtual resource file, and the virtual resource file uniquely identifies the corresponding service. For example, a virtual resource file of the general resource management service is Open/read/write/ioctl. As shown in FIG. 4 (or FIG. 5), a communication channel between the identity and access management module and each service is preset in the kernel. The service information maintained by the identity and access management module may include a correspondence between the virtual resource file and the communication channel. Correspondingly, the identity and access management module may find, in the service information based on the virtual resource file (for example, "Open/read/write/ioctl"), that a channel corresponding to the virtual resource file is a first channel, that is, a channel between the identity and access management module and the general resource management service. In this case, it may be determined that the general resource management service is the first service that needs to provide a service for the first business. The communication channel between the identity and access management module and the service may alternatively be based on IPC communication (or another communication protocol, which is not limited in this application). Specific implementation is similar to that of the identity verification channel between the business and the identity and access management module. Details are not described herein again.

For example, after determining the first service based on the first virtual resource file in the access request, the identity and access management module performs S303.

S303: The identity and access management module sends the access request to the first service.

For example, after determining the first service, the identity and access management module sends (or may be understood as forwarding) the access request to the first service. The access request includes the identification information of the first business and the access request information. The access request indicates the first service to provide the real resource for the first business. To be distinguished from the access request in S301, the access request in S303 may be referred to as access indication information.

For example, as described above, the identity and access management module exchanges data with the first service through a preset communication channel, and the identity and access management module may send the access indication information to the first service through the communication channel between the identity and access management module and the first service.

For example, the communication channel between the identity and access management module and the first service may be based on IPC communication. Correspondingly, the identity and access management module may re-encapsulate the access indication information into a format required by a protocol (for example, IPC communication) supported by the communication channel, and send the access indication information to the first service.

S304: The first service determines, based on the access request, whether the first business has permission to access the first virtual resource file.

For example, the first service may receive, through the communication channel, the access indication information sent by the identity and access management module. The first service decapsulates the access request, and obtains information carried in the access request. The information includes but is not limited to the identification information of the first business, the access request information, and the like.

For example, as described above, the first service maintains a business permission table. The business permission table includes at least one entry, and the entry includes identification information and permission information of a business. The permission information indicates whether the business has permission to access a virtual resource file. It should be noted that, in this embodiment of this application, the service is presented to the business as the virtual resource file, and the service manages a real resource. Correspondingly, that the service determines whether the first business has the permission to access the first virtual resource file may alternatively be understood as whether the first business has the permission to access the first service, or may be understood as whether the first business has the permission to access the real resource managed by the first service. Certainly, the first business cannot directly access the real resource, but accesses the real resource by using the first service.

For example, after a human-computer interaction business runs, if the human-computer interaction business needs to access a network, a kernel needs to provide a network resource (for example, Bluetooth) for the human-computer interaction business. An access request sent by the human-computer interaction business includes a first virtual resource file (for example, "Open/read/write/ioctl"), identification information of the human-computer interaction business, access request information, and the like. After performing validity verification on the human-computer interaction business, the identity and access management module determines that a corresponding first service is a general resource management service. For specific details, refer to the foregoing descriptions. Details are not described herein again. The identity and access management module sends access indication information to the general resource management service, where the access indication information includes the identification information of the human-computer interaction business and the access request information. The general resource management service may determine, based on the business permission table, whether the human-computer interaction business has permission to access "Open/read/write/ioctl" (that is, the first virtual resource file). If the human-computer interaction business has the permission to access "Open/read/write/ioctl", the general resource management service may perform S305, that is, provide a network resource of a kernel for the human-computer interaction business, for example, open a file corresponding to the network resource based on the access request information.

In a possible implementation, if the first service determines, based on the business permission table, that the first business has no permission to access the first virtual resource file, the first service refuses the first business to access the real resource managed by the first service. Optionally, the first service may send a refuse response to the first business, to indicate that the first business is refused to access the first virtual resource file. This may alternatively be understood as that the first business is refused to access the real resource corresponding to the first virtual resource file.

S305: The first service establishes a secure channel between the first service and the first business.

In this embodiment of this application, after determining that the first business has the permission to access the first virtual resource file, the first service may establish the secure channel between the first service and the first business. An objective of establishing the secure channel is to enable the first business to access the first virtual resource file through the secure channel when the first business has the permission to access the first virtual resource file, to ensure access security. In addition, after the secure channel is established, when the first business performs an operation (for example, a read operation and/or a write operation) on the first virtual resource file, the first business does not need to perform the identity verification phase described above. In other words, all businesses that exchange data with the service through the secure channel are valid businesses that have been verified.

In this embodiment of this application, the secure channel may be maintained based on IPC communication. For example, data may be exchanged in a pipe communication manner in IPC communication, to implement message pass-through between the first business and the first service. For a communication manner of the secure channel, refer to the identity verification channel between the business and the identity and access management module. Details are not described herein again.

In a possible implementation, if an invalid business directly accesses a service without using the identity and access management module, when determining that the invalid business does not perform interaction through the secure channel, the service may determine, based on the business permission table, that the invalid business has no access permission, and refuse the business to access a real resource, to ensure security of the real resource and prevent an attack from a malicious application.

It should be noted that all channels (including the identity verification channel, the communication channel between the identity and access management module and the service, and the secure channel between the business and the service) in this embodiment of this application are preconfigured. In other words, the invalid business cannot communicate with the identity and access management module or the service through the preconfigured channels. For example, an operator has preconfigured a secure channel establishment policy (for example, port information, and a specific policy depends on a communication manner of the channel) between the business and the service. When the secure channel is established between the first service and the first business, the secure channel may be established according to the preset policy.

For example, after the secure channel is established between the first service and the first business, the first service may send secure channel establishment success response information to the first business, to indicate that the secure channel has been established.

For example, in a process of establishing the secure channel between the first service and the first business, or before or after the secure channel is established, that is, after the first service determines that the first business has the permission to access the first virtual resource file, the first service provides a corresponding real resource for the first business in response to the access request. Optionally, in an access scenario (that is, the business requests access permission from the service), the first service may access (or may be understood as opening) a file corresponding to the corresponding real resource. It should be noted that the kernel may present a real resource in a form of a file to an upper-layer module or a business. Correspondingly, accessing, reading, or writing the real resource by the service in this embodiment of this application may be understood as performing an operation on the file corresponding to the real resource. For example, the first service may send response information to the first business through the secure channel. The response information indicates that the corresponding real resource has been accessed (or opened), or may be understood as that the virtual resource file requested by the business has been opened for the business. In this embodiment of this application, after the file is opened, subsequent operations such as reading and/or writing may be performed.

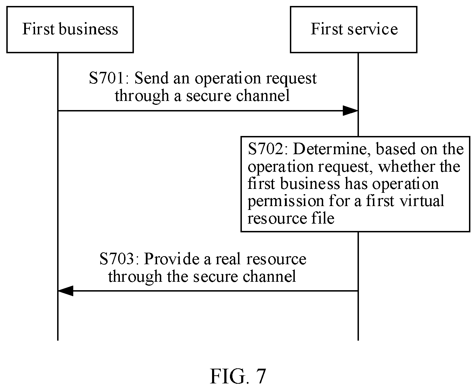

FIG. 7 is a diagram of an example of an access procedure. Refer to FIG. 7. Steps include but are not limited to the following.

S701: A first business sends an operation request to a first service through a secure channel.

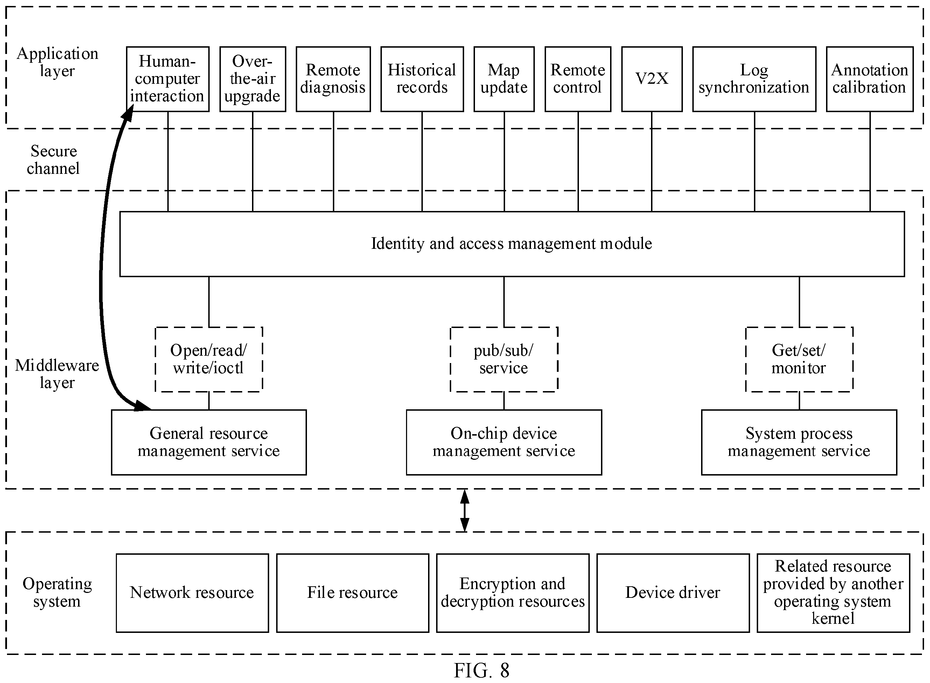

As shown in FIG. 8, for example, as described above, the secure channel has been established between the first business and the first service. The first business may directly exchange data with the first service through the secure channel. For example, the first business may send the operation request to the first service through the secure channel. The operation request includes but is not limited to identification information of the first business, identification information of a first virtual resource file, and operation request information. The operation request information includes but is not limited to: read request information and/or the write request information, used to request to read and/or write a real resource corresponding to the first virtual resource file.

S702: The first service determines, based on the operation request, whether the first business has operation permission for the first virtual resource file.

In this embodiment of this application, a business permission table maintained by the first service further records an operation permission of the business. The operation permission includes but is not limited to read permission, write permission, and the like. In other words, the first service may determine, based on the business permission table, whether the first business has the read permission and/or the write permission for the first virtual resource file.

The first service may determine, based on operation permission requested by the first business (that is, permission indicated by the operation request information) and the business permission table, whether the first business has target operation permission for the first virtual resource file (that is, the permission requested by the first business). It may alternatively be understood as whether the first business has the target operation permission for the real resource corresponding to the virtual resource file. In other words, in this embodiment of this application, the business has permission to access the real resource, and the business may open the real resource. If the business needs to perform an operation on a real resource, for example, read or write, the business needs to have corresponding permission to perform the operation on the real resource. This ensures reliability and security of the real resource, and prevents an unauthorized business from modifying the real resource.

In an example, if the first business has the operation permission for the first virtual resource file, S703 is performed.

In another example, if the first business does not have the operation permission for the first virtual resource file, the first service returns an operation failure response to the first business through the secure channel, to indicate to refuse an operation performed by the first business on the first virtual resource file. This may alternatively be understood as refusing an operation performed by the first business on the corresponding real resource.

S703: The first service provides the real resource for the first business through the secure channel.

For example, after determining that the first business has the operation permission for the first virtual resource file, that is, the operation permission for the real resource corresponding to the first virtual resource file, the first service may provide the corresponding real resource for the first business.

For example, an access request of the first business includes read request information, and the read request information is used to request to read data in the real resource corresponding to the first virtual resource file. Optionally, the read request information may also include information such as a location of data that needs to be read. This is not limited in this application. Correspondingly, after determining that the first business has the permission to read the first virtual resource file, the first service may send specified data in the real resource to the first business through the secure channel. After receiving the data, the first business may perform a corresponding operation, for example, may display corresponding data on a screen of a vehicle-mounted device. This is not limited in this application.

For another example, an access request of the first business includes write request information, and the write request information is used to request to write data into the first virtual resource file (that is, the corresponding real resource). Optionally, the write request information may include data that needs to be written. Correspondingly, after determining that the first business has the write permission corresponding to the first virtual resource file, the first service may write the data in the write request information into the corresponding real resource.

In a possible implementation, before or after the business ends running, the business may send a close request to the service through the secure channel between the business and the service, where the close request may indicate that the current access ends. It may be understood that a close operation corresponds to an access operation, the access operation is used to open a file, and the close operation is used to close a file. For example, in response to the received close request, the service releases the secure channel between the service and the business, and closes the file corresponding to the corresponding real resource. For example, if the business needs to access the first virtual resource file again, that is, the real resource corresponding to the first service, the business needs to perform S301 again. In other words, validity verification and access permission authentication procedures need to be performed on the business again, and after the foregoing procedures are completed, the secure channel is re-established between the business and the first service. It should be noted that, as described above, the secure channel between the business and the service is pre-established and unique. For example, a corresponding module (for example, a channel maintenance module, which is not limited in this application) may be disposed in a kernel to maintain corresponding configuration information. The configuration information may include channel configuration policies of the channels (including the identity verification channel, the secure channel, and the like) described above. The service can re-establish the secure channel with the business according to the configuration policy. The secure channel and the previously established secure channel have same configuration information, and may also be considered as a same secure channel.

In this embodiment of this application, a kernel of an operating system provides a mandatory access control mechanism. In the mandatory access control mechanism, if the kernel detects that a business directly accesses a real resource, that is, the business does not access the real resource in an access manner in this embodiment of this application, the kernel may determine that the business is an invalid business, and a current access is an invalid access. The kernel forbids the business to access the real resource. Optionally, the kernel may directly delete the business. Optionally, the kernel may display prompt information through an interaction interface of the vehicle-mounted device, to indicate that a malicious business accesses a system resource. A user may manually delete the business based on the prompt information. In this way, a business process can be prevented from directly accessing a target real resource by bypassing an access control architecture, thereby ensuring access security and reliability.

In other words, in this embodiment of this application, if validity verification is not performed on the business by the identity and access management module, or the business does not interact with the service through the secure channel and does not have access permission, or the business does not perform an operation on the real resource through the secure channel (that is, directly accesses the real resource), a module (which may be the service, the identity and access management module, or the kernel) in the system may forbid the business to access the real resource, to protect security of the real resource.

In this embodiment of this application, because a quantity of virtual resource files is limited, based on the foregoing access control manner, an access control policy needs to be set only based on the limited virtual resource files. In comparison with a conventional technology in which an access control policy is set based on a large quantity of scattered real resources (that is, access permission corresponding to each business needs to be set for each real resource), entries of the access control policy are greatly reduced, thereby reducing configuration difficulty and costs, and improving configuration efficiency.

In this embodiment of this application, the access control policy is compiled based on the business and the virtual resource file, and complexity of the access control policy is positively correlated with a quantity of businesses and a quantity of virtual resource files. However, in each business scenario, the quantity of businesses and the quantity of virtual resource files are limited. Therefore, a quantity of access control policies is not large, and policy access performance and query performance can be ensured, thereby reducing configuration difficulty and use costs, and improving configuration efficiency.

In this embodiment of this application, setting of a plurality of virtual resource files is determined by re-integrating the target real resource based on a service needed by the business scenario. Therefore, the setting of the virtual resource files is more suitable for the business scenario. In addition, access to the real resource is implemented by accessing the virtual resource file, and the setting of the virtual resource file is more suitable for the business scenario. Therefore, the access control architecture and the access control manner are more suitable for the business scenario, and security performance is higher.

In this embodiment of this application, based on a manner of accessing the virtual resource file, a business accesses a real resource in the same way as accessing a common file. In other words, the real resource is presented to the business as a virtual resource file, or may be understood as a file path, so that programming is easier.

In the conventional technology, because access is for a specific real resource, when providing a real resource for a business, the kernel needs to separately preconfigure corresponding permission for each of a plurality of real resources needed by the business and perform authentication. A configuration process of this access manner is complex, and an authentication manner in an access process is also complex, thereby reducing access efficiency. However, in this application, access is for the virtual resource file, or it may be understood as that the access is for a set of real resources corresponding to the service. Therefore, when the service provides a service for the business, only permission of the business for the virtual resource file corresponding to the needed service needs to be verified, thereby improving access efficiency and reducing access costs.

In a possible implementation, the first business may further access a real resource managed by a second service. The second service is different from the first service. The real resource managed by the second service may be completely different from or partially different from the real resource managed by the first service. For a specific implementation, refer to the foregoing embodiments. Details are not described herein again.

In another possible implementation, a second business may also access the first service or a second service, and an access manner is the same as that in the foregoing embodiments. For example, the second business accesses the first service. Optionally, the second business may not have permission to access the first virtual resource file. Correspondingly, the first service may refuse the second business to access a corresponding real resource. In other words, a same permission or different permissions may be set for different businesses corresponding to a same service. For example, the business permission table of the first service records that the first business has access permission, read permission, and write permission corresponding to the first virtual resource file, and a business permission table of the second service records that the first business has access permission and read permission corresponding to a second virtual resource file, and records that the second business has access permission and write permission corresponding to the second virtual resource file. Specific permission may be preset based on an actual requirement. This is not limited in this application.

In still another possible implementation, an intelligent vehicle may periodically (or may be on another occasion, which is not limited in this application) send request information to a cloud, to request a business permission table of a latest version of each service. In other words, the operator may set a new business permission table on the cloud, for example, add, delete, or modify an entry in the business permission table of the second service. The intelligent vehicle may obtain the business permission table of the latest version from the cloud, and update the business permission table. The second service may manage and control business permission based on the new business permission table.

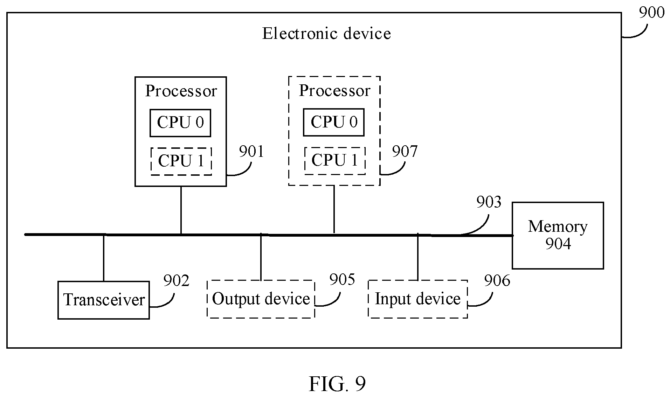

An embodiment of this application further provides an electronic device. As shown in FIG. 9, the electronic device 900 includes a processor 901, a transceiver 902, and a communication line 903.

The processor 901 is configured to perform any step in the foregoing method embodiments.

Further, the electronic device 900 may further include a memory 904. The processor 901, the memory 904, and the transceiver 902 may be connected through the communication line 903.

The processor 901 is a CPU, a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 901 may be another apparatus having a processing function, for example, a circuit, a component, or a software module. This is not limited.

The transceiver 902 is configured to communicate with another device or another communication network. The another communication network may be the Ethernet, a radio access network (radio access network, RAN), a wireless local area network (wireless local area network, WLAN), or the like. The transceiver 902 may be a module, a circuit, a transceiver, or any apparatus that can implement communication.

The transceiver 902 is mainly configured to send and receive a bitstream, and may include a transmitter and a receiver that respectively send and receive the bitstream. Operations other than bitstream sending and receiving, for example, information processing and calculation, are implemented by the processor.

The communication line 903 is configured to transmit information between components included in the electronic device 900.

In a design, the processor may be considered as a logic circuit, and the transceiver may be considered as an interface circuit.

The memory 904 is configured to store instructions. The instructions may be a computer program.

The memory 904 may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 904 may alternatively be a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium, another magnetic storage device, or the like. It should be noted that the memory of the system and method described in this specification includes but is not limited to these and any memory of another proper type.

It should be noted that the memory 904 may exist independently of the processor 901, or may be integrated with the processor 901. The memory 904 may be configured to store instructions, program code, some data, or the like. The memory 904 may be located in the electronic device 900, or may be located outside the electronic device 900. This is not limited. The processor 901 is configured to execute the instructions stored in the memory 904, to implement the method provided in the foregoing embodiments of this application.

In an example, the processor 901 may include one or more CPUs.

Optionally, the electronic device 900 further includes an output device 905 and an input device 906. The input device 906 is a device such as a keyboard, a mouse, a microphone, or a joystick, and the output device 905 is a device such as a display screen or a speaker (speaker).

The electronic device 900 may be a chip system or a device having a structure similar to that in FIG. 9. The chip system may include a chip, or may include a chip and another discrete device. Mutual reference may be made to actions, terms, and the like in embodiments of this application. This is not limited. In this embodiment of this application, names of messages exchanged between devices, names of parameters in the messages, or the like are merely examples. Other names may alternatively be used during specific implementation. This is not limited. In addition, a composition structure shown in FIG. 9 does not constitute a limitation on the electronic device 900. In addition to the components shown in FIG. 9, the electronic device 900 may include more or fewer components than those shown in FIG. 9, or combine some components, or have different component arrangements.

The processor and the transceiver described in this application may be implemented in an integrated circuit (integrated circuit, IC), an analog IC, a radio frequency integrated circuit, a mixed signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (N-type Metal oxide semiconductor, NMOS), a positive channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

An embodiment further provides a computer storage medium. The computer storage medium stores computer instructions, and when the computer instructions are run on an electronic device, the electronic device is enabled to perform the related method steps, to implement the method in the foregoing embodiments.

An embodiment further provides a computer program product. When the computer program product runs on a computer, the computer is enabled to perform the related steps, to implement the method in the foregoing embodiments.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, to enable the chip to perform the method in the foregoing method embodiments.

The electronic device, the computer storage medium, the computer program product, or the chip provided in embodiments is configured to perform the corresponding method provided above. Therefore, for beneficial effects that can be achieved by the electronic device, the computer storage medium, the computer program product, or the chip, refer to the beneficial effects in the corresponding method provided above. Details are not described herein.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the method in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The term "and/or" in this specification describes only an association relationship for describing associated objects and represents that three relationships may exist. For example, A and/or B may represent the following three cases: Only A exists, both A and B exist, and only B exists.

The terms "first", "second", and the like in the specification and claims in embodiments of this application are used to distinguish between different objects, and are not used to describe a particular sequence of the objects. For example, a first target object, a second target object, and the like are used to distinguish between different target objects, but are not used to describe a specific sequence of the target objects.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner.

In descriptions of embodiments of this application, "a plurality of" means two or more, unless otherwise specified. For example, a plurality of processing units mean two or more processing units, and a plurality of systems mean two or more systems.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An access control method, wherein the method comprises:
obtaining a first file request sent by a first application, wherein generation of the first file request is triggered by performing a target file operation on a target resource file by the first application;
detecting, based on the first file request and preset permission information, whether the first application has operation permission for the target file operation; and
when the first application has the permission to perform the target file operation, invoking, based on the first file request, a plurality of system resources managed by a target service corresponding to the target resource file, wherein the plurality of system resources comprise software and hardware entities needed in a running process of the first application.

2. The method according to claim 1, wherein the method further comprises:
obtaining a second file request sent by the first application, wherein generation of the second file request is triggered by accessing the target resource file by the first application; and
the obtaining a first file request sent by a first application comprises:
when determining, based on the second file request, that the first application has access permission, obtaining the first file request sent by the first application.

3. The method according to claim 2, wherein the obtaining a second file request sent by the first application comprises:
after identity verification on the first application succeeds, obtaining the second file request sent by the first application.

4. The method according to claim 3, wherein
the second file request comprises identification information of the target resource file and identification information of the first application, and the identity verification is performed based on the identification information of the target resource file and the identification information of the first application.

5. The method according to claim 4, wherein the identification information of the target resource file is a file path of the target resource file.

6. The method according to any one of claims 1 to 5, wherein when the target file operation is a write operation, the first file request comprises first target data; and
the invoking, based on the first file request, a plurality of system resources managed by a target service corresponding to the target resource file comprises:
writing the first target data into the plurality of system resources managed by the target service corresponding to the target resource file.

7. The method according to any one of claims 1 to 5, wherein when the target file operation is a read operation, the invoking, based on the first file request, a plurality of system resources managed by a target service corresponding to the target resource file comprises:
reading, based on the first file request, second target data from the plurality of system resources managed by the target service corresponding to the target resource file; and
returning the second target data to the first application.

8. The method according to any one of claims 1 to 7, wherein
the target file operation comprises the read operation or the write operation.

9. An access control apparatus, wherein the access control apparatus comprises a target service, wherein
the target service is configured to obtain a first file request sent by a first application, wherein generation of the first file request is triggered by performing a target file operation on a target resource file by the first application;
the target service is further configured to detect, based on the first file request and preset permission information, whether the first application has operation permission for the target file operation; and
the target service is further configured to: when the first application has the permission to perform the target file operation, invoke, based on the first file request, a plurality of system resources managed by the target service corresponding to the target resource file, wherein the plurality of system resources comprise software and hardware entities needed in a running process of the first application.

10. The apparatus according to claim 9, wherein the apparatus further comprises an identity and access management module, the identity and access management module exchanges data with the first application through a first communication channel, and the identity and access management module exchanges data with the target service through a second communication channel;
the identity and access management module is configured to obtain, through the first communication channel, a second file request sent by the first application, wherein generation of the second file request is triggered by accessing the target resource file by the first application, and the second file request comprises identification information of the target resource file and identification information of the first application;
the identity and access management module is further configured to: when identity verification performed on the first application based on the identification information of the target resource file and the identification information of the first application succeeds, send the second file request to the target service through the second communication channel; and
the target service is further configured to: when determining, based on the second file request, that the first application has access permission, establish a third communication channel between the target service and the first application.

11. The apparatus according to claim 10, wherein
the target service is specifically configured to obtain, through the third communication channel, the first file request sent by the first application.

12. The apparatus according to claim 10 or 11, wherein the identification information of the target resource file is a file path of the target resource file.

13. The apparatus according to any one of claims 9 to 12, wherein when the target file operation is a write operation, the first file request comprises first target data; and
the target service is specifically configured to write the first target data into the plurality of system resources managed by the target service corresponding to the target resource file.

14. The apparatus according to any one of claims 9 to 12, wherein when the target file operation is a read operation,
the target service is specifically configured to: read, based on the first file request, second target data from the plurality of system resources managed by the target service corresponding to the target resource file; and return the second target data to the first application.

15. The apparatus according to any one of claims 9 to 14, wherein the target file operation comprises the read operation or the write operation.

16. A computer storage medium, comprising computer instructions, wherein when the computer instructions are run on an electronic device, the electronic device is enabled to perform the method according to any one of claims 1 to 8.

17. A computer program product, wherein when the computer program product runs on a computer, the computer is enabled to perform the method according to any one of claims 1 to 8.

18. A chip, comprising one or more interface circuits and one or more processors, wherein the interface circuit is configured to: receive a signal from a memory of an electronic device, and send the signal to the processor, wherein the signal comprises computer instructions stored in the memory; and when the processor executes the computer instructions, the electronic device is enabled to perform the method according to any one of claims 1 to 8.
